# EUROPÄISCHE PATENTANMELDUNG

(11) **EP 0 562 484 A1**
(43) Veröffentlichungstag der Anmeldung: **29.09.1993**
(21) Anmeldenummer: 93104538.9
(22) Anmeldetag: 19.03.1993
(51) Int. Cl.: B62B 3/06

(54) **Gabelhubwagen**

(30) Priorität: 26.03.1992 DE 4209863
(71) Anmelder: Linde Aktiengesellschaft, D-65189 Wiesbaden (DE)
(72) Erfinder: Soulas, Frank, F-86150 L'Isle Jourdain (FR); Cartier, Guy, F-86200 Loudun (FR)
(74) Vertreter: Schaefer, Gerhard, Dr.

(57) **Zusammenfassung**

Ein Gabelhubwagen weist anhebbare Lastarme (3,4) auf, die jeweils aus einem aus Stahlblech gefertigten, als Hohlprofil ausgebildeten Lastarmkorpus (3a,4a) und einer damit fest verbundenen, durch Gießen hergestellten Lastarmspitze (3b,4b) bestehen. Die Lastarme (3,4) sind auf Tragrollen (5) abgestützt, die an Hebelarmen (6) gelagert sind, welche mittels in horizontalen Querbohrungen (7) der Lastarmspitzen (3b,4b) angeordneten Bolzen (8) schwenkbar sind.

## Beschreibung

Die Erfindung betrifft einen Gabelhubwagen mit anhebbaren Lastarmen. Derartige Gabelhubwagen werden zum Beispiel als Niederhubwagen oder Kommissionierer in Geh-, Sitz- oder Standausführung eingesetzt. Oft sind diese Geräte deichselgelenkt. Die in der Regel aus Stahlblech gefertigten Lastarme weisen die Form eines Hohlprofils auf, was einerseits stabilitätserhöhend wirkt und andererseits die Unterbringung des Hubgestänges innerhalb der Lastarme ermöglicht. Durch die Ausbildung der Lastarme als Hohlprofil genügen bereits dünne Blechstärken, um eine ausreichende Biegefestigkeit auf der Überwiegenden Länge des Lastarms zu erreichen. Allerdings sind die Lastarmspitzen erheblich größeren Belastungen ausgesetzt, da in Fällen, in denen eine Last zunächst nur angehoben werden soll und deswegen die Last nur mit den Lastarmspitzen unterfahren wird, das Gewicht der anzuhebenden Last ausschließlich auf den kleinen Flächen der Lastarmspitzen aufliegt. Die Dimensionierung der Materialstärke der Lastarme erfolgt daher in Abhängigkeit von der Belastung der Lastarmspitzen, so daß die Lastarme im Bereich außerhalb der Lastarmspitzen wesentlich stärker dimensioniert sind als erforderlich, was das Gewicht vergrößert und die Herstellung verteuert. Hinzu kommt, daß die Lastarmspitzen eine besondere Form zum leichteren Unterfahren und Einführen in Paletten benötigen und mit Ausnehmungen für die Tragrollen zu versehen sind, so daß hier ein erheblicher Fertigungaufwand hinsichtlich der Blechbearbeitung vorliegt.

Der vorliegenden Erfindung liegt die Aufgabe zugrunde, einen Gabelhubwagen zur Verfügung zustellen, der einfacher und preisgünstiger herstellbare Lastarme aufweist.

Diese Aufgabe wird erfindungsgemß dadurch gelöst, daß die Lastarme jeweils aus einem aus Stahlblech gefertigten, als Hohlprofil ausgebildeten Lastarmkorpus und einer damit fest verbundenen, durch Gießen hergestellten Lastarmspitze bestehen. Die Lastarmspitzen können somit entsprechend den dort auftretenden Belastungen wesentlich stärker dimensioniert werden als der Rest des Lastarms (Lastarmkorpus), der in gewohnter Weise aus Stahlblech gefertigt wird, wobei die Wandstärke wegen der niedrigeren Belastungen dünner ausfallen kann als bei den Lastarmen der Gabelhubwagen des Standes der Technik. Der Herstellaufwand ist insgesamt sehr gering. Der Lastarmkorpus ist als durchgehendes Stangenhohlprofil ausgebildet, das entsprechend der gewünschten Lastarmlänge abgeschnitten und mit der durch Gießen hergestellten Lastarmspitze fest verbunden wird, beispielsweise durch Schweißen.

Bei den Gabelhubwagen stützt sich jeder Lastarm auf zumindest einer Tragrolle ab. Oft sind zur Verringerung der Fahrbahnbelastung sogenannte Tandemrollen vorgesehen. Die Tragrollen sind an Hebelarmen gelagert, die mittels in horizontalen Querbohrungen der Lastarme angeordneten Bolzen schwenkbar sind. Bei den Lastarmen des Standes der Technik ergeben sich fertigungstechnische Probleme beim Einbringen der Querbohrungen. In der Regel sind nämlich in jedem Lastarm zwei zueinander koaxiale Bohrungen angeordnet. Die Wanddicke des Hohlprofils reicht als Lagerstelle für den Bolzen nicht aus, so daß es erforderlich ist, Verstärkungsmaterial anzuschweißen. Werden die Querbohrungen vor dem Aufschweißen des Verstärkungsmaterials sowohl in dieses als auch in die Hohlprofile eingearbeitet, so ist es schwierig, die Koaxialität der Querbohrungen beim Aufschweißen zu gewährleisten.

Gemäß einer besonders vorteilhaften Weiterbildung der Erfindung sind deshalb die Querbohrungen in der gegossenen Lastarmspitze angeordnet. Querbohrungen in Gußbauteile der vorliegenden Größenordnung einzubauen ist fertigungstechnisch ohne großen Aufwand zu bewerkstelligen.

Weiter Vorteile und Einzelheiten der Erfindung werden anhand eines in den Figuren schematisch dargestellten Ausführungsbeispieles näher erläutert. Dabei zeigt:

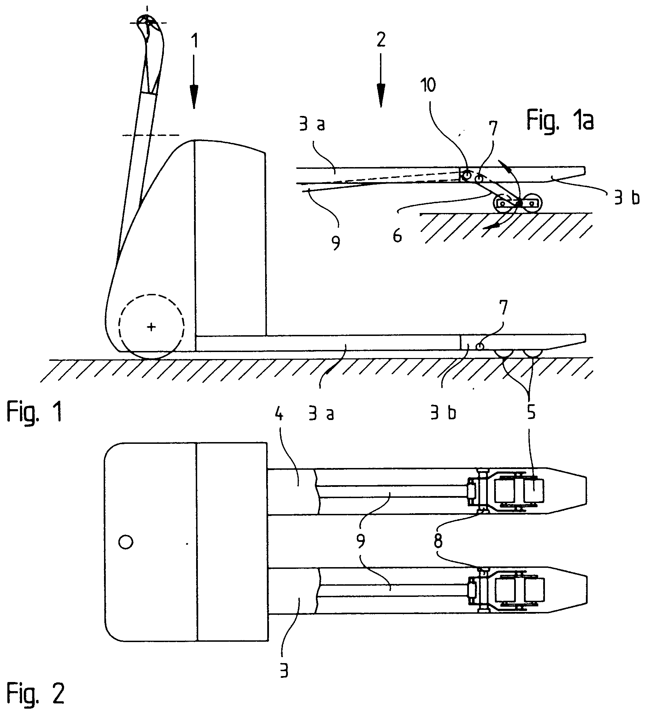

- Figur 1: eine Seitenansicht eines erfindungsgemäßen Gabelhubwagens;
- Figur 1a: einen Ausschnitt aus der Seitenansicht gemäß Figur 1 bei angehobenen Lastarmen;
- Figur 2: eine Draufsicht auf den Gabelhubwagen gemäß Figur 1;
- Figur 3: eine perspektivische Darstellung der Lastarme ohne Lastarmspitzen;
- Figur 4: eine Seitenansicht einer Lastarmspitze;
- Figur 5: eine Draufsicht im Teilschnitt auf die Lastarmspitze.

Ein in diesem Ausführungsbeispiel als Elektro-Deichsel-Hubwagen ausgebilder Gabelhubwagen weist ein Antriebsteil 1 und ein damit gelenkig verbundenes, anhebbares Lastteil 2 auf, an dem Lastarme 3 und 4 befestigt sind. Die Lastarme 3 und 4 stützen sich über Tragrollen 5 in Tandemanordnung auf der Fahrbahn ab. Die Tragrollen 5 sind an Hebelarmen 6 gelagert, die mit Hilfe von in horizontalen Querbohrungen 7 angeordneten Bolzen 8 schwenkbar sind. Die Schwenkbewegung der Hebelarme 6, die das Anheben der Lastarme 3 bzw. 4 und damit des Lastteils 2 bewirkt, wird jeweils durch eine Hubstange 9 erzeugt, die an einem Hebelarm 10 angreift, der in diesem Beispiel mit dem Hebelarm 6 einstückig verbunden ist.

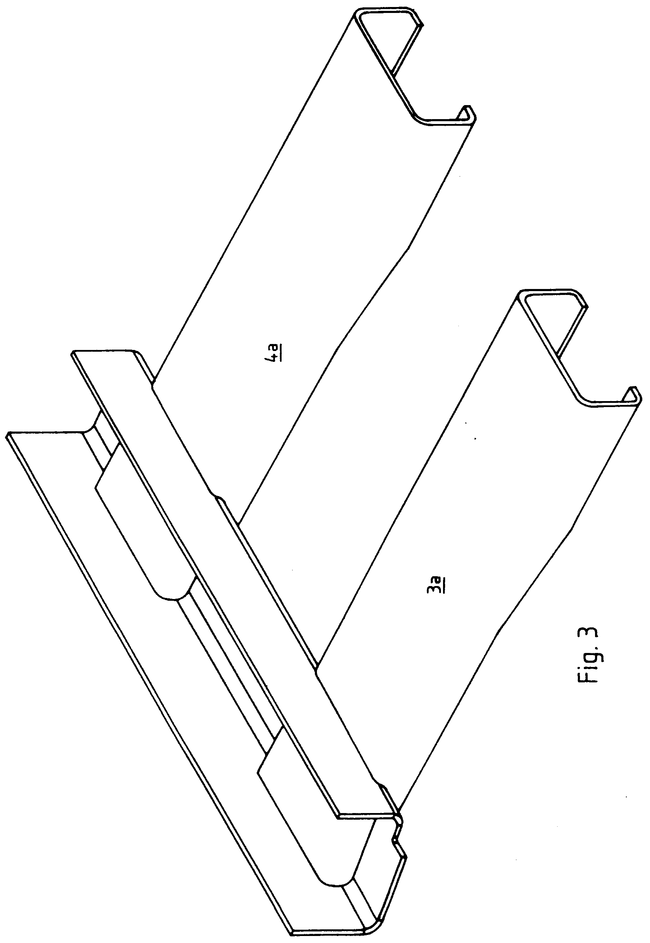

Erfindungsgemäß besteht jeder Lastarm 3 bzw. 4 aus einem Lastarmkorpus 3a bzw. 4a und einer Lastarmspitze 3b bzw. 4b, wobei die Lastarmspitzen 3b bzw. 4b gegossen und dort die Querbohrungen 7 angeordnet sind. Jeder Lastarmkorpus 3a bzw. 4a besteht aus einem aus Stahlblech gefertigten Hohlprofil, wie es in Figur 3 dargestellt ist.

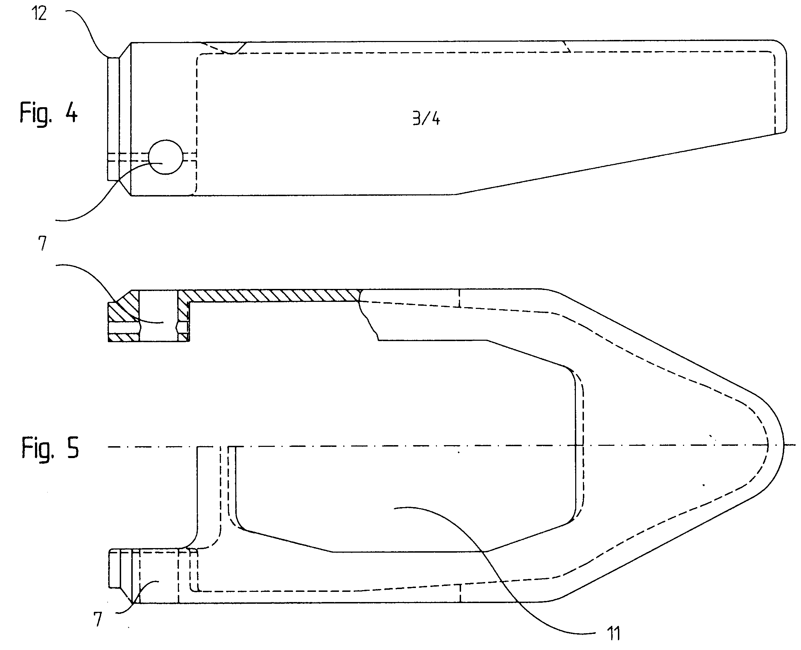

Die Konstruktion der Lastarmspitzen 3b bzw. 4b ist in den Figuren 4 und 5 dargestellt. Die Herstellung der Lastarmspitzen 3b bzw. 4b durch Gießen ermöglich auf einfache Weise die spezielle Formgebung der Lastarmspitzen einschließlich des Durchbruchs 11, der zum Eintauchen der Lastrollen 5 bei vollständig abgesenkten Lastarmen 3 bzw. 4 vorgesehen ist. Die Einarbeitung der koaxialen Querbohrungen 7 gestaltet sich ebenfalls sehr einfach. Am in den Figuren 4 und 5 rechten Rand der Lastarmspitze 3 bzw. 4 ist eine gegossene Zentrierung 12 vorgesehen.

## Patentansprüche

1. Gabelhubwagen, mit anhebbaren Lastarmen, **dadurch gekennzeichnet**, daß die Lastarme (3,4) jeweils aus einem aus Stahlblech gefertigten, als Hohlprofil ausgebildeten Lastarmkorpus (3a,4a) und einer damit fest verbundenen, durch Gießen hergestellten Lastarmspitze (3b,4b) bestehen.

2. Gabelhubwagen nach Anspruch 1, wobei sich die Lastarme auf Tragrollen abstützen, die an Hebelarmen gelagert sind, welche mittels in horizontalen Querbohrungen der Lastarme angeordneten Bolzen schwenkbar sind, dadurch gekennzeichnet, daß die Querbohrungen (7) in der gegossenen Lastarmspitze (3b,4b) angeordnet sind.
